# EUROPEAN PATENT APPLICATION

(11) **EP 4 564 544 A1**
(43) Date of publication of application: **04.06.2025**
(21) Application number: 23212848.8
(22) Date of filing: 29.11.2023
(51) Int. Cl.: H01M 50/147, H01M 50/30, H01M 50/574

(54) **VENTING UNIT FOR VENTING MACHINERY SPACE**

(71) Applicant: MANN+HUMMEL GmbH, 71636 Ludwigsburg (DE)
(72) Inventor: FALLBÖHMER, Stefan, 71636 Ludwigsburg (DE); ZBIRAL, Robert, 71636 Ludwigsburg (DE)
(74) Representative: Mann + Hummel Intellectual Property

(57) **Abstract**

A venting unit (100) for venting a machinery space includes a base body (10) mountable in a substantially fluid tight manner to an opening of the machinery space, the base body (10) having a fluid permeable passageway (22) for venting and including a metallic contact counter-means (26), and an opening cover (30) covering the fluid permeable passageway (22), and including a fixation element (32) attached to and detachable from the base body (10). The opening cover (30) further includes a metallic contact means (34) configured to establish an electric connection to the metallic contact counter-means (26) of the base body (10) in an intended mounting state of the opening cover (30) to the base body (10).

## Description

### TECHNICAL FIELD

The invention relates to a venting unit for venting a machinery space, in particular a battery housing.

### BACKGROUND ART

JP2021190262A discloses an abnormality detection device of a battery pack with single cells having an exhaust valve for discharging internal gas when the internal pressure exceeds a set pressure. A battery case for accommodating the single cells includes switch means whose state changes when the internal pressure of the battery case exceeds a predetermined pressure. Control devices are electrically connected to the switch means.

US 20210242530 A1 discloses a battery module including: a battery set including a plurality of batteries arranged in an array, each of the batteries including an explosion-proof valve; a cover plate disposed on the battery set; and a thermosensitive assembly disposed between the battery set and the cover plate. The thermosensitive assembly is connected with the cover plate. The thermosensitive assembly includes a thermosensitive wire, and the thermosensitive wire can provide a prompt signal indicating that the explosion-proof valve of the battery is burst.

### SUMMARY

It is an object of the invention to provide an improved venting unit for venting a machinery space, in particular a battery housing.

According to an aspect of the invention the object is achieved by a venting unit for venting a machinery space, in particular a battery housing, the venting unit comprising a base body mountable in a substantially fluid tight manner to an opening of the machinery space, the base body having a fluid permeable passageway for venting and comprising a metallic contact counter-means, and an opening cover covering the fluid permeable passageway, and comprising a fixation element attached to and detachable from the base body. The opening cover further comprises a metallic contact means configured to establish an electric connection to the metallic contact counter-means of the base body in an intended mounting state of the opening cover to the base body.

Advantageous embodiments are described in the dependent claims, the description and the drawings.

According to an aspect of the invention, a venting unit for venting a machinery space, in particular a battery housing, is proposed, the venting unit comprising a base body mountable in a substantially fluid tight manner to an opening of the machinery space, the base body having a fluid permeable passageway for venting and comprising a metallic contact counter-means, , and an opening cover covering the fluid permeable passageway, and comprising a fixation element attached to and detachable from the base body. The opening cover further comprises a metallic contact means configured to establish an electric connection to the metallic contact counter-means of the base body in an intended mounting state of the opening cover to the base body.

As soon as the opening cover is released from its normal position on the base body, the electric connection between the contact means and the contact counter-means is interrupted. This signal may be detected for further action.

Advantageously, a fail-safe behavior of e.g. a battery housing may be established or even increased by the proposed venting unit as the correct functioning of the venting unit can be checked and guaranteed.

A misuse such as removing the opening cover may be detected. Discrepancies to the normal operational state can be recognized.

Despite, in an abnormal operational state the opening cover could be detached which may also be detected by the proposed venting unit in a reliable way.

If the opening cover is removed due to rising pressure in the battery housing, the electric connection is interrupted which may be detected by a dedicated electronic system for alerting and/or further actions.

According to a favorable embodiment of the venting unit, the electric connection between the metallic contact means of the opening cover and the metallic contact counter-means of the base body may be configured to close or open an electric current loop in the intended mounting state of the opening cover to the base body (10). If the opening cover is removed the electric current loop is interrupted or closed which may be detected by an appropriate electronic system for further action. Thus a fail-safe behavior of the venting unit may be guaranteed.

According to a favorable embodiment of the venting unit, the base body may further comprise at least one electric connector electrically connected to the metallic contact counter-means, and the at least one electric connector may be configured to be electrically connected to an electric system for detecting a demounted state of the opening cover from the base body. Thus the correct functioning of the contact means with the contact counter-means may be checked. The established current loop may be realized via the electric connector to an appropriate electronic system.

According to a favorable embodiment of the venting unit, the fixation element of the opening cover may comprise a clamp element, and the base body may further comprise a counter-fixation element comprising a support element corresponding to the clamp element, the clamp element and the support element being configured for cooperation in the intended mounting state of the opening cover to the base body. Thus, proper fixation of the opening cover may be realized. The clamp element, when made from metal, may serve as the contact means for establishing the electric current loop for detection of removing the clamp element from its corresponding support element.

According to a favorable embodiment of the venting unit, the fixation element may comprise the metallic contact means of the opening cover, and the counter-fixation element may comprise the metallic contact counter-means of the base body. The metallic contact means may be integrated into the fixation element for proper electric connection to the metallic contact counter-means of the base body.

According to a favorable embodiment of the venting unit, the fixation element may be configured as the metallic contact means of the opening cover, and the counter-fixation element may be configured as the metallic contact counter-means of the base body. The fixation element may be made from a metal sheet and thus serve as the contact means for establishing the electric connection to the metallic contact counter-means of the base body.

According to a favorable embodiment of the venting unit, the at least one electric connector may comprise electric pins electrically connected to the metallic contact counter-means. Thus, the electric signal via the metallic contact means and the metallic contact counter-means may be detected by an electronic system connected to the electric connector.

According to a favorable embodiment of the venting unit, the fixation element and/or the counter-fixation element may comprise electrically conductive areas as the metallic contact means and/or the metallic contact counter-means. Thus, a reliable electric contact may be established between the fixation element and counter-fixation element for detection of removing the opening cover.

According to a favorable embodiment of the venting unit, the metallic contact means and/or the metallic contact counter-means may comprise at least partly overmolded electric wires. Thus, a reliable electric contact may be established between the fixation element and counter-fixation element for detection of removing the opening cover.

According to a favorable embodiment of the venting unit, the fixation element may comprise holding means and the metallic contact means that are functionally separated. Thus, the metallic contact means may be adapted to serving the electric connection to the metallic contact counter-means in a particularly reliable way.

According to a favorable embodiment of the venting unit, the metallic contact means may comprise electrically conductive areas and/or electric wires. By this way, conventional opening covers may be used for the proposed venting unit. The fixation elements of the cover does not need to be changed if metallic contact areas and/or wires are integrated for establishing the electric contact to the metallic contact counter-means of the base body.

According to a favorable embodiment of the venting unit, the venting unit further includes a semipermeable membrane closing the fluid permeable passageway and being configured to allow gas exchange between the machinery space and the venting unit, while preventing fluid and/or dust particles to enter the machinery space.

### BRIEF DESCRIPTION OF DRAWINGS

The present invention together with the above-mentioned and other objects and advantages may best be understood from the following detailed description of the embodiments, but not restricted to the embodiments, wherein is shown in:
- Figure 1: a venting unit for venting a machinery space, in particular a battery housing, according to an embodiment of the invention in a front view;
- Figure 2: the venting unit in a sectional view according to section plane A-A in Fig. 1;
- Figure 3: a detail X of the venting unit according to Fig. 2;
- Figure 4: the venting unit according to Fig. 1 in a rear view;
- Figure 5: the venting unit in a sectional view according to section plane B-B in Fig. 4;
- Figure 6: the venting unit in a sectional view according to section plane C-C in Fig. 4;
- Figure 7: part of the venting unit in a sectional isometric view;
- Figure 8: a detail Y of the venting unit according to Fig. 7;
- Figure 9: a venting unit according to a further embodiment of the invention in a rear view;
- Figure 10: the venting unit in a sectional view according to section plane C-C in Fig. 9;
- Figure 11: a venting unit according to a further embodiment of the invention in a sectional view according to a section plane A-A;
- Figure 12: a detail X of the venting unit according to Fig. 11;
- Figure 13: the venting unit of Fig. 11 in a sectional view according to a section plane C-C;
- Figure 14: part of the venting unit of Fig. 11 in a sectional isometric view;
- Figure 15: a venting unit according to a further embodiment of the invention in a sectional view according to a section plane A-A;
- Figure 16: the venting unit of Fig. 15 in a sectional view according to a section plane C-C;
- Figure 17: part of the venting unit of Fig. 15 in a sectional isometric view;
- Figure 18: a fixation element of the venting unit of Fig. 15 in an isometric view;
- Figure 19: a venting unit according to a further embodiment of the invention in a rear view;
- Figure 20: the venting unit of Fig. 19 in a sectional view according to a section plane A-A;
- Figure 21: the venting unit in a sectional view according to a section plane C-C in Fig. 19;
- Figure 22: part of the venting unit of Fig. 19 in a sectional isometric view; and
- Figure 23: a detail Y of the venting unit according to Fig. 22.

### DETAILED DESCRIPTION

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

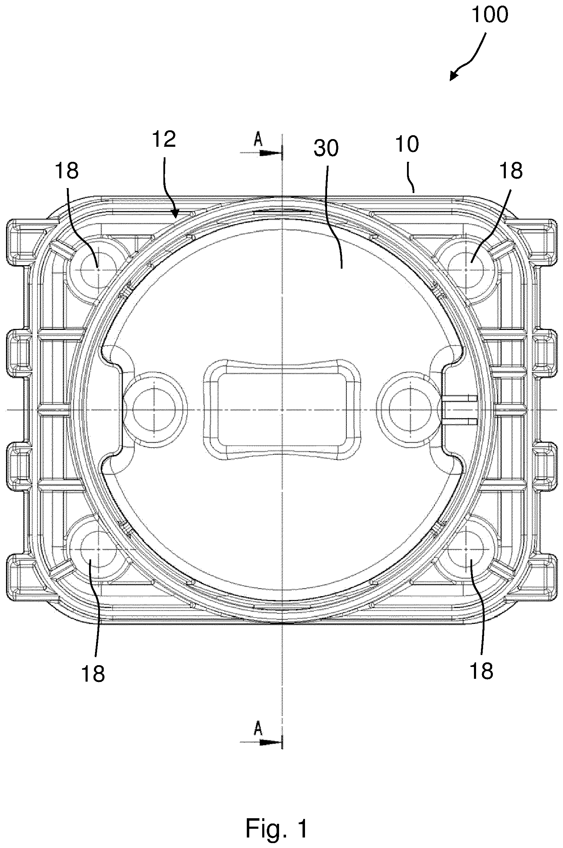

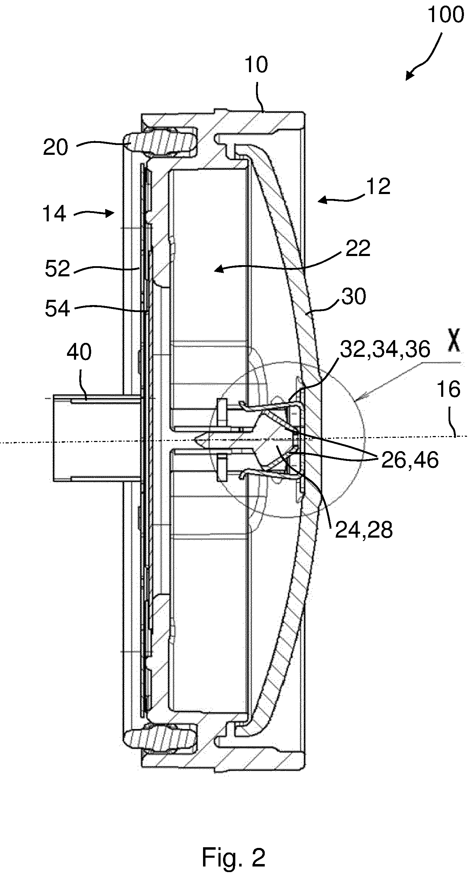

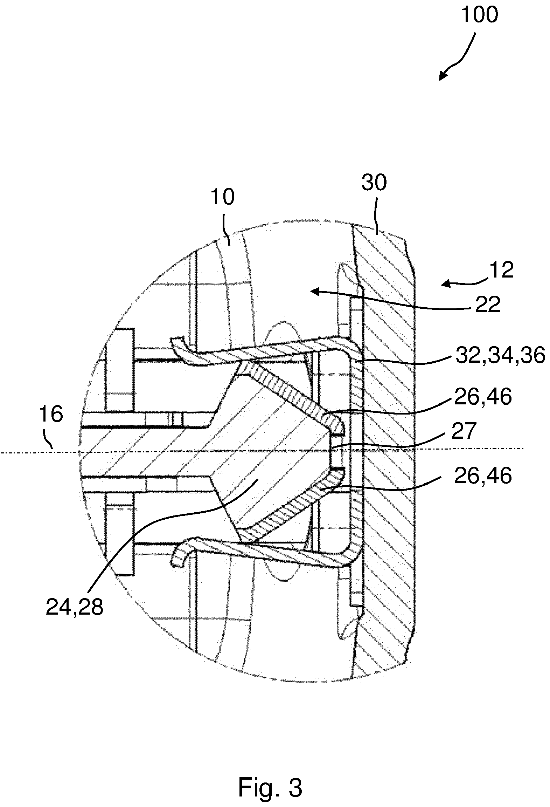

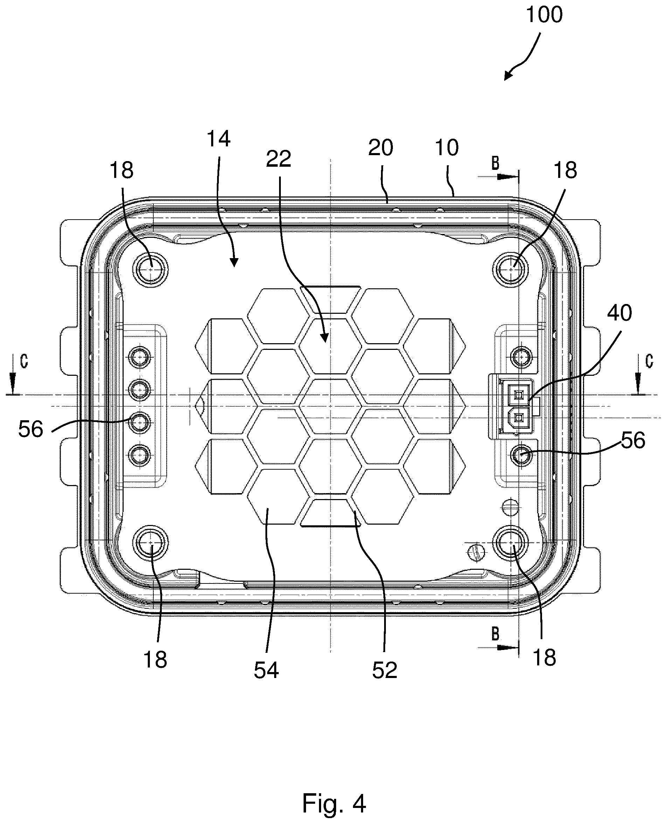

Figure 1 depicts a venting unit 100 for venting a machinery space, in particular a battery housing, according to an embodiment of the invention in a front view. In Figure 2 the venting unit 100 is shown in a sectional view according to section plane A-A in Figure 1, whereas in Figure 3 a detail X of the venting unit 100 according to Figure 2 is depicted. Figure 4 depicts the venting unit 100 in a rear view.

The venting unit 100 comprises a base body 10 with a front side 12 and a rear side 14 along an axial direction 16, with one or more mounting elements 18 and a sealing element 20 for being mounted with the rear side 14 in a substantially fluid tight manner to an opening of the machinery space. The one or more mounting elements 18 may comprise screw threads for mounting the base body 10 to the machinery space.

The base body 10 has a fluid permeable passageway 22 for venting. The sealing element 20 is arranged surrounding the passageway 22 for sealing against the machinery space when the base body 10 is mounted to the machinery space.

An opening cover 30, made from some electrically insulating material, covers the passageway 22. The opening cover 30 is attached to and detachable from the base body 10 by a fixation element 32. The fixation element 32 is configured as an interface to a counter-fixation element fixation element 24 of the base body 10.

The opening cover 30 comprises a metallic contact means 34, being configured to establish an electric connection to a metallic contact counter-means 26 of the base body 10 in an intended mounting state of the opening cover 30 to the base body 10.

The electric connection between the metallic contact means 34 of the opening cover 30 and the metallic contact counter-means 26 of the base body 10 is configured to close or open an electric current loop in an intended mounting state of the opening cover 30.

The metallic contact counter-means 26 is electrically connected to at least one electric connector 40, 42 (Figures 2 and 4) attached to the base body 10. In particular, electric pins 44 of the at least one electric connector 40, 42 are electrically connected to the metallic contact counter-means 26.

The electric connector 40, 42 is configured to be electrically connected to an electric system for detecting a demounted state of the opening cover 30. So, if the electric current loop is interrupted, the electric system may detect this interruption and cause appropriate further action.

As may be seen from Figure 2 and in more details from Figure 3, the fixation element 32 of the opening cover 30 is configured as a clamp element 36 and the counter-fixation element 24 is configured as a corresponding support element 28. The clamp element 36 and the support element 28 are configured for cooperation in an intended mounting state of the opening cover 30. So, if the opening cover 30 is mounted to the base body 10, the clamp element 36 snaps around the support element 28 and establishes a reliable fixation of the opening cover 30 to the base body 10.

The clamp element 36 may be made from metal and thus automatically is configured as the metallic contact means 34 of the opening cover 30.

Alternatively, the fixation means 32 may comprise some metallic contact means 34 for establishing the electric contact to the metallic contact counter-means 26 of the counter-fixation element 24.

As may be seen from Figure 3, the counter-fixation element 24 may comprise electrically conductive areas 46 as the metallic contact counter-means 26.

For this purpose, the support element 28 may comprise some metallization as conductive areas 46 for serving as the metallic contact counter-means 26 of the base body 10. The conductive areas 46 exhibit some electrically insulating gap 27 in between. Thus electric connection may be established between the two conductive areas 46 by the metallic clamp element 36 when the opening cover 30 is in an intended mounting position on the base body 10.

Alternatively, the support element 28 may also be made from metal with an electrically insulating gap 27 between two parts of the support element 28 and thus be configured as the metallic contact counter-means 26 of the base body 10.

As may be seen from Figures 2 and 4, the passageway 22 of the base body 10 is closed from the rear side 14 of the base body 10 by a semipermeable membrane 54. The semipermeable membrane 54 serves for or allow gas exchange between the machinery space the venting unit 100 is mounted to and venting unit 100, while preventing fluid and/or dust particles and the like to enter the machinery space. The semipermeable membrane 54 is supported and mechanically protected by a grille 52 which is attached to the base body and fixed by fixation pods 56, e.g. by welding, in particular ultrasonic welding or gluing.

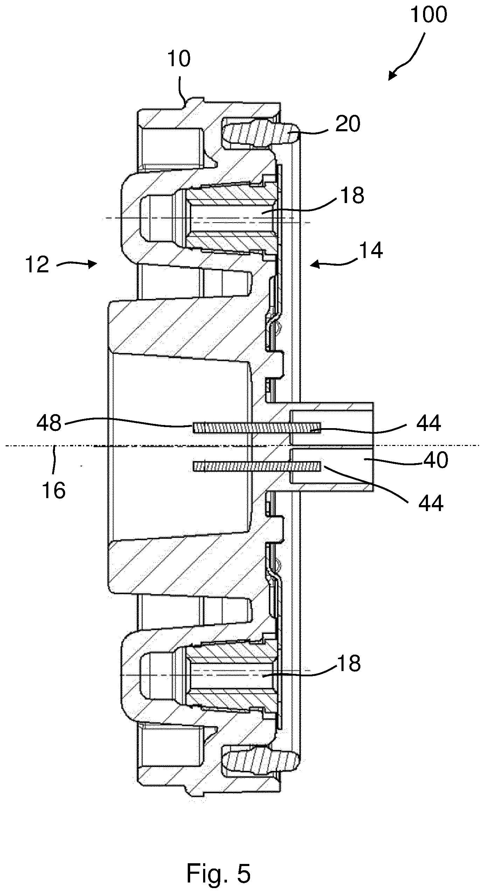

Figure 5 depicts the venting unit 100 in a sectional view according to section plane B-B in Figure 4. In Figure 5 the opening cover 30 is omitted. Arrangement of the one or more mounting elements 18 and the sealing element 20 may be recognized.

The electric connector 40 is to be seen in the sectional view with two electric pins 44 which are continued into wires 48 for contacting the metallic contact counter-means 26 of the counter-fixation element 24.

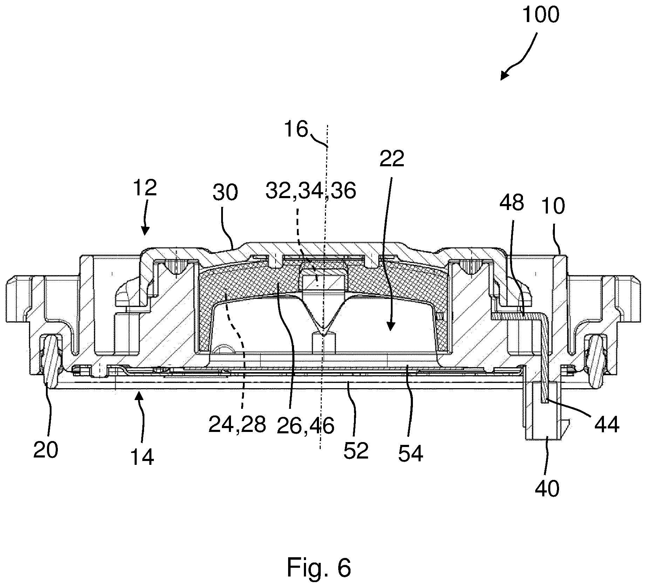

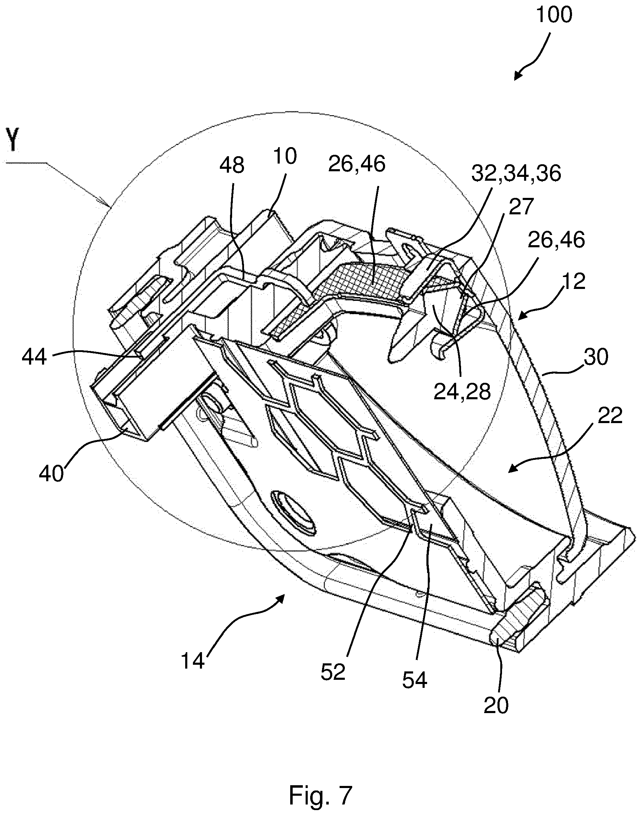

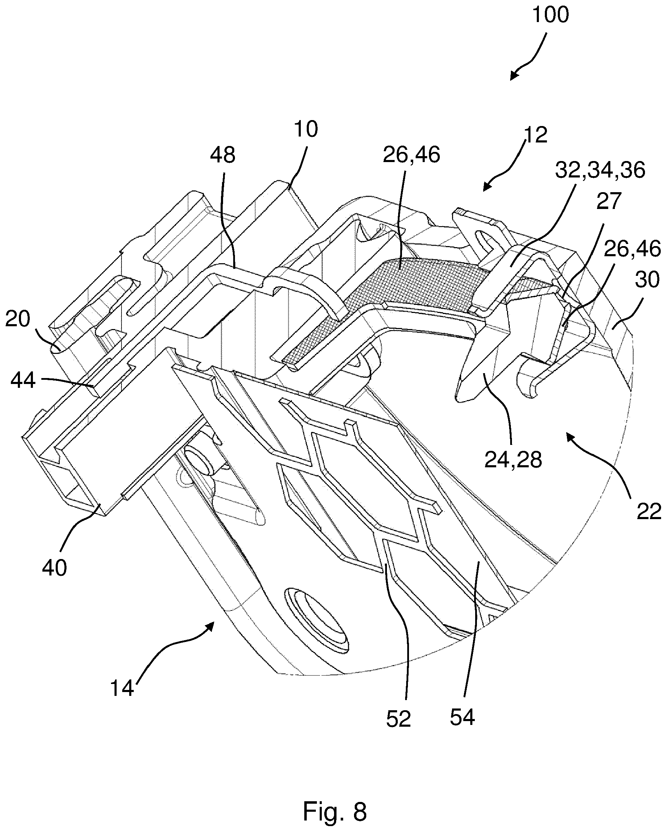

Figure 6 depicts the venting unit 100 in a sectional view according to section plane C-C in Figure 4. In Figure 7 part of the venting unit 100 in a sectional isometric view is shown, whereas in Figure 8 a detail Y of the venting unit 100 according to Figure 7 is depicted.

Particularly, in Figures 7 and 8 the cooperation of the fixation element 32 as the metallic contact means 34 and the counter-fixation element 24 with the conductive areas 46 as the metallic contact counter-means 26 may be recognized from the Figures. Also, the electric connection from the electric pins 44 of the electric connector 40 via wires 48 to the conductive areas 46 of the contact counter-means 26 may be seen. The wires 48 contact conductive areas 46 of the counter-fixation element 24 from both sides. The clamp element 36 as the fixation element 32 establishes the electric connection between both conductive areas 46 when the opening cover 30 is in its mounting position to the base body 10.

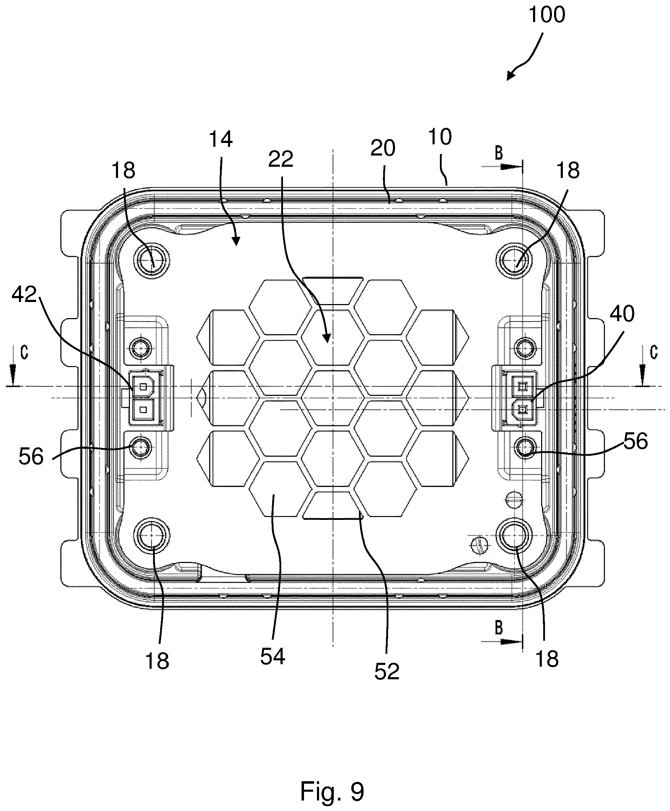

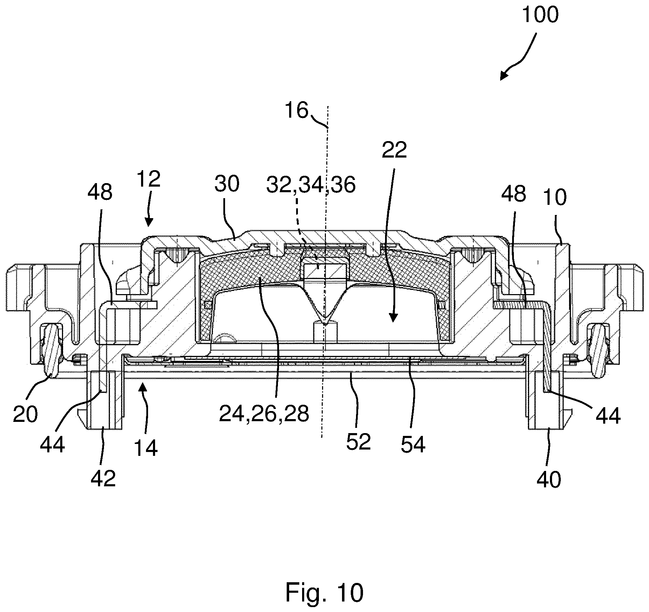

Figure 9 depicts a venting unit 100 according to a further embodiment of the invention in a rear view, whereas Figure 10 depicts the venting unit 100 in a sectional view according to section plane C-C in Figure 9.

This embodiment is very similar to the embodiment shown in the Figures 1 to 8. The difference is that the venting unit 100 comprises two electric connectors 40, 42 for contacting the metallic contact counter-means 26 of the counter-fixation element 24. Thus, additional safety may be provided, or additional electric functions may be implemented for detecting the removed opening cover 30.

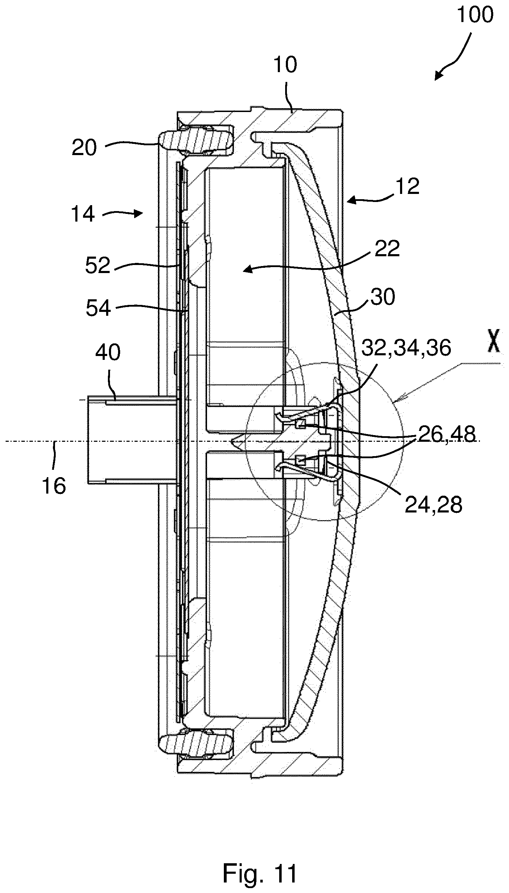

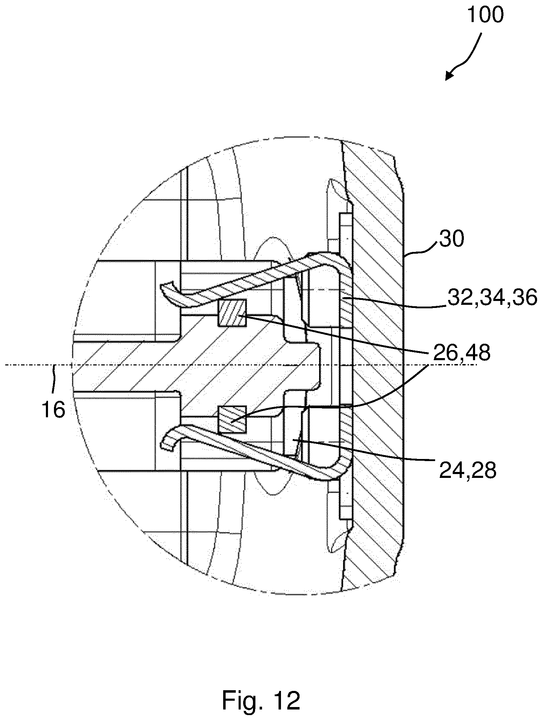

Figure 11 depicts a venting unit 100 according to a further embodiment of the invention in a sectional view according to a section plane A-A, as marked in Figure 1. Figure 12 depicts a detail X of the venting unit 100 according to Figure 11.

In this embodiment the metallic contact counter-means 26 is configured as electric wires 48, in particular as at least partly overmolded electric wires 48. The electric wires 48 are attached on both sides of the counter-fixation element 24. Thus, the fixation element 32 in the form of a clamp element 36 as metallic contact means 34 establishes an electric connection between the two wires 48 when the opening cover 30 is fixed to the counter-fixation element 24.

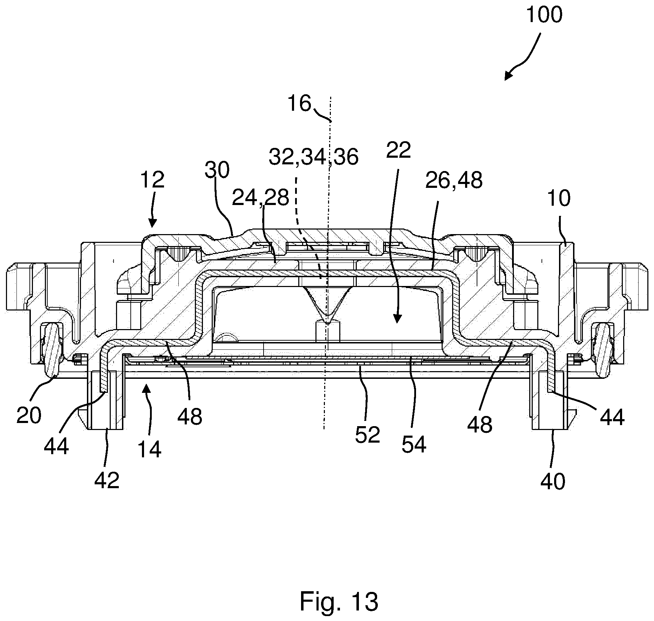

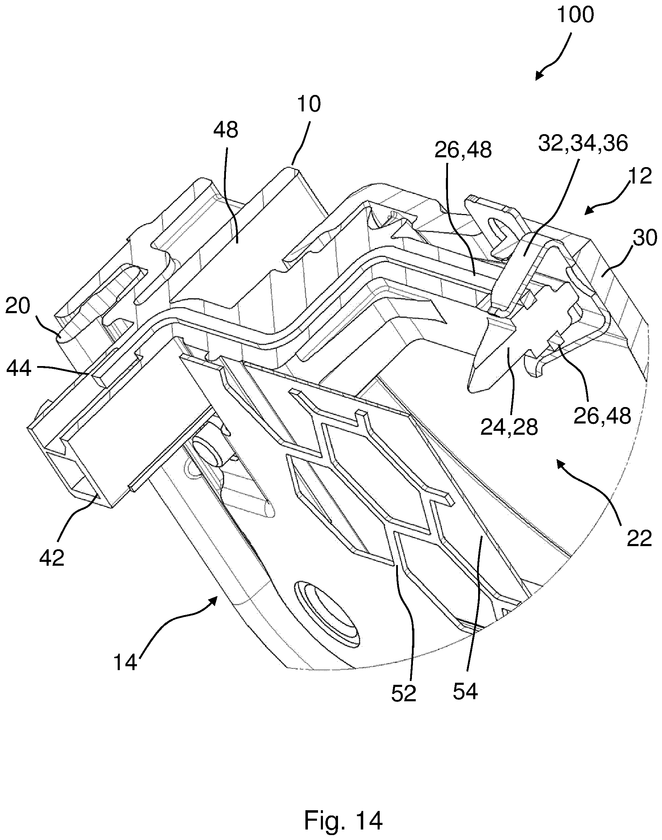

Figure 13 depicts the venting unit 100 of Figure 11 in a sectional view according to a section plane C-C as marked in Figure 4. In Figure 14 part of the venting unit 100 of Figure 11 is shown in a sectional isometric view.

As may be recognized the embodiment comprises two electric connectors 40, 42. The electric pins 44 of the electric connectors 40, 42 are continued with electric wires 48 which are led on both sides of the counter-fixation element 24. The wires 48 may partly be overmolded in the base body 10 and may only be free of an electric insulation in the contact area of the metallic contact means 34 of the fixation element 32.

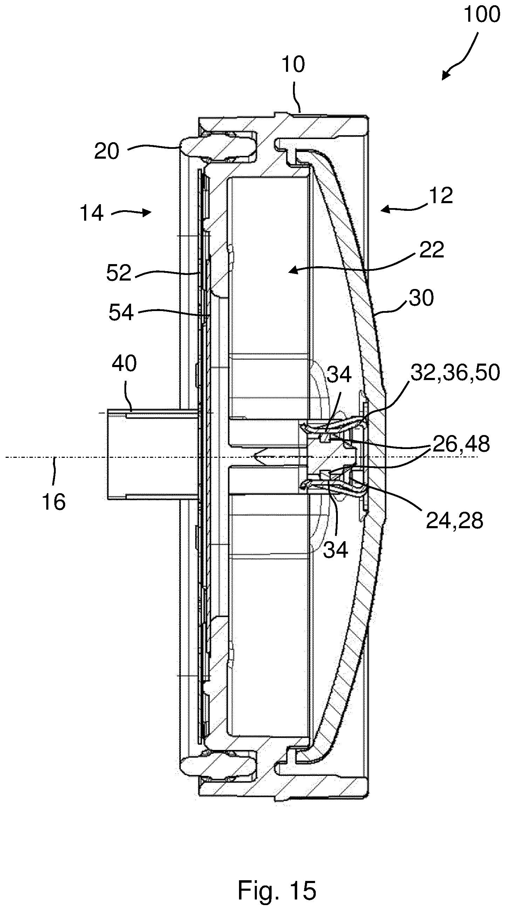

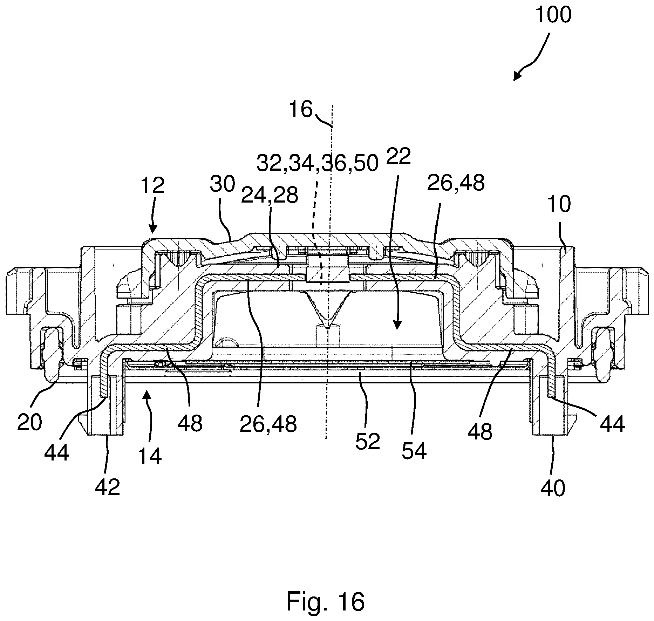

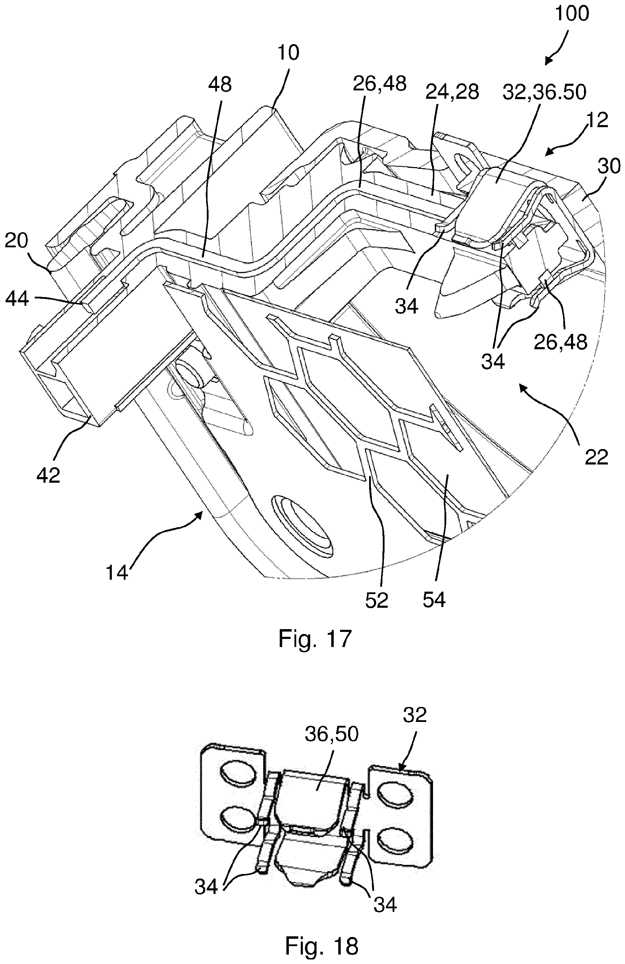

Figure 15 depicts a venting unit 100 according to a further embodiment of the invention in a sectional view according to a section plane A-A as marked in Figure 1. Figure 16 depicts the venting unit 100 of Figure 15 in a sectional view according to a section plane C-C as marked in Figure 4. In Figure 17 part of the venting unit 100 of Figure 15 is depicted in a sectional isometric view, whereas in Figure 18 a fixation element 32 of the venting unit 100 of Figure 15 is shown in an isometric view.

This embodiment resembles the embodiment shown in Figures 11 to 14. The difference lies in the fixation element 32. The fixation element 32 is configured with functionally separated holding means 50 and metallic contact means 34.

As particularly may be seen from Figures 17 and 18, the fixation element 32 comprises a holding means 50 in the form of a clamp element 36. At both sides of the holding means 50 contact means 34 are provided for electrically contacting the electric wires 48 of the contact counter-means 26. Thus, a reliable electric contact may be established for providing the electric connection between both sides of the contact counter-means 26 closing the electric current loop.

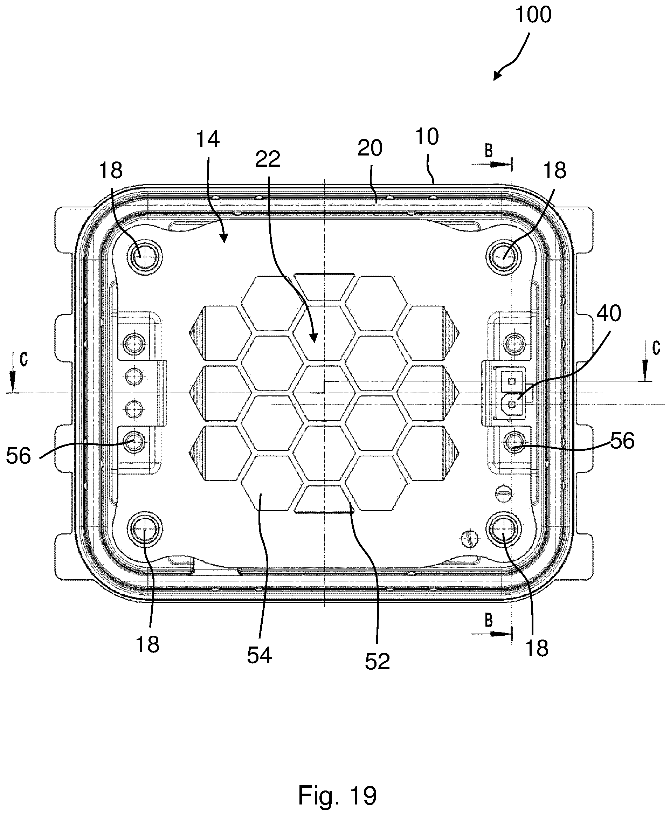

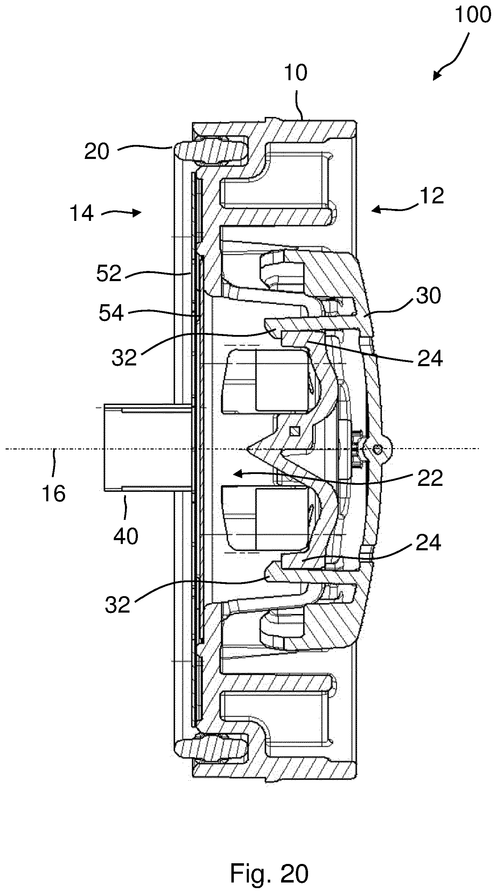

Figure 19 depicts a venting unit 100 according to a further embodiment of the invention in a rear view. In Figure 20 the venting unit 100 of Figure 19 is shown in a sectional view according to a section plane A-A as marked in Figure 1.

As may be seen from the Figures, the opening cover 30 comprises fixation means 32 which are clamped around a counter-fixation means 24 configured in the center of the base body 10. In this way, conventional venting units 100 are usually designed.

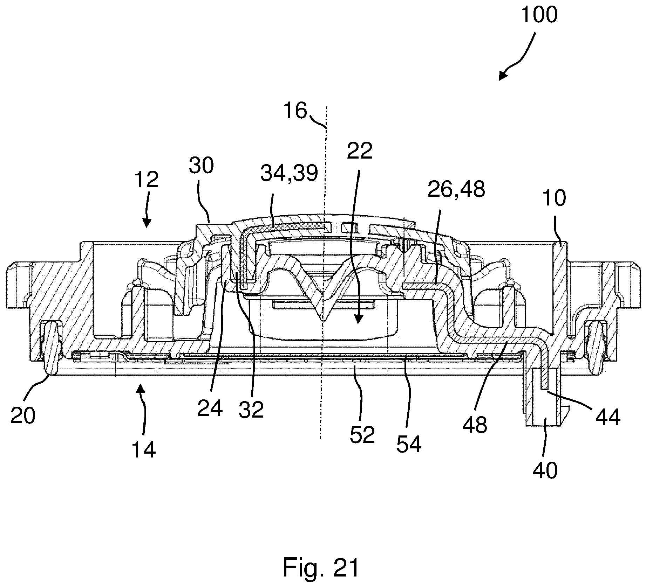

In Figure 21 the venting unit 100 is shown in a sectional view according to a section plane C-C in Figure 19. It may be emphasized that the section plane exhibits a step in the center of the base body 10.

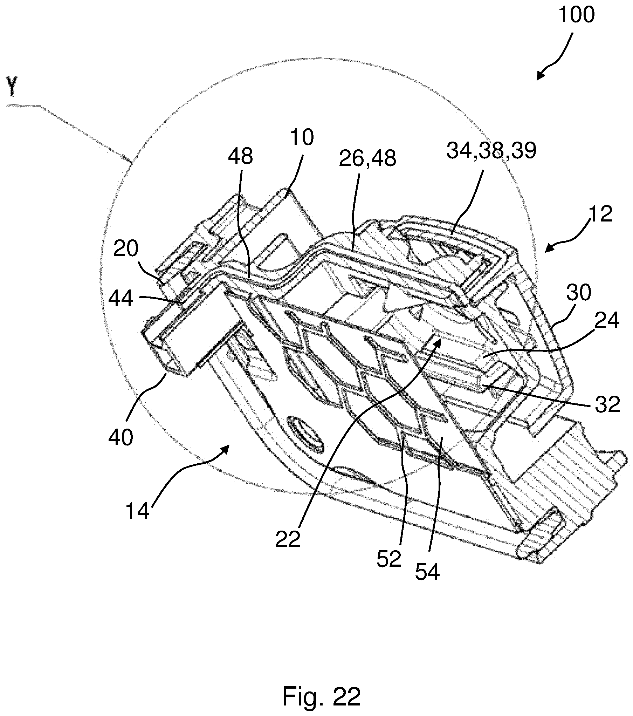

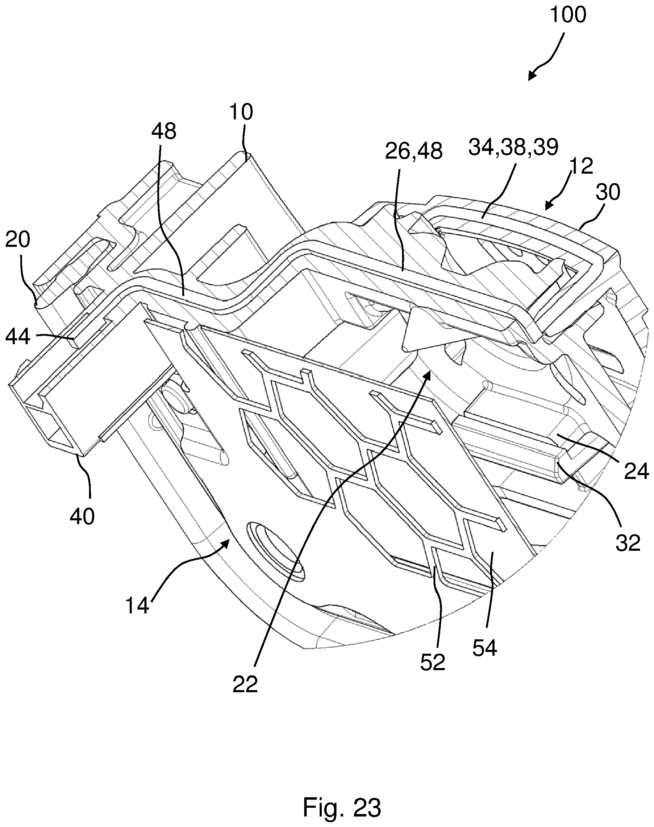

Figure 22 depicts part of the venting unit 100 of Figure 19 in a sectional isometric view, whereas in Figure 23 a detail Y of the venting unit according to Figure 22 is shown.

As may be seen from Figures 21 to 23, the opening cover 30 comprises the metallic contact means 34, in particular as electrically conductive areas 38 and/or as electric wires 39. Thus, the electrically conductive areas 38 and/or as electric wires 39 may be electrically contacted by the electric wires 48 of the contact counter-means 26 when the opening cover 30 is mounted to the base body 10 and fixed with the clamp-like fixation means 32 to the counter-fixation elements 24 of the base body 10.

When removing the opening cover 30 from the base body 10 the electric connection between the electrically conductive areas 38 and/or as electric wires 39 and the electric wires 48 of the contact counter-means 26 may be interrupted. Thus, the removing of the opening cover 30 may favorably be detected for further action to be initiated.

### REFERENCE SIGNS LIST

- 10: base body
- 12: front side
- 14: rear side
- 16: axial direction
- 18: mounting element
- 20: sealing element
- 22: passageway
- 24: counter-fixation element
- 26: contact counter-means
- 27: gap
- 28: support element
- 30: opening cover
- 32: fixation element
- 34: contact means
- 36: clamp element
- 38: conductive area
- 39: wire
- 40: electric connector
- 42: electric connector
- 44: electric pin
- 46: conductive area
- 48: wire
- 50: holding means
- 52: grille
- 54: semipermeable membrane
- 56: fixation pod
- 100: venting unit

## Claims

1. A venting unit (100) for venting a machinery space, the venting unit (100) comprising:
a base body (10) mountable in a substantially fluid tight manner to an opening of the machinery space, the base body (10) having a fluid permeable passageway (22) for venting and comprising a metallic contact counter-means (26); and
an opening cover (30) covering the fluid permeable passageway (22), and comprising a fixation element (32) attached to and detachable from the base body (10),
wherein the opening cover (30) further comprises a metallic contact means (34) configured to establish an electric connection to the metallic contact counter-means (26) of the base body (10) in an intended mounting state of the opening cover (30) to the base body (10).

2. The venting unit (100) according to claim 1, wherein the electric connection between the metallic contact means (34) of the opening cover (30) and the metallic contact counter-means (26) of the base body (10) is configured to close or open an electric current loop in the intended mounting state of the opening cover (30) to the base body (10).

3. The venting unit (100) according to claim 1 or 2, wherein the base body (10) further comprises at least one electric connector (40, 42) electrically connected to the metallic contact counter-means (26), and
wherein the at least one electric connector (40, 42) is configured to be electrically connected to an electric system for detecting a demounted state of the opening cover (30) from the base body (10).

4. The venting unit (100) according to any one of the preceding claims, wherein the fixation element (32) of the opening cover (30) comprises a clamp element (36), and
wherein the base body (10) further comprises a counter-fixation element (24) comprising a support element (28) corresponding to the clamp element (36), the clamp element (36) and the support element (28) being configured for cooperation in the intended mounting state of the opening cover (30) to the base body (10).

5. The venting unit (100) according to claim 4, wherein the fixation element (32) comprises the metallic contact means (34) of the opening cover (30), and
wherein the counter-fixation element (24) comprises the metallic contact counter-means (26) of the base body (10).

6. The venting unit (100) according to claim 4, wherein the fixation element (32) is configured as the metallic contact means (34) of the opening cover (30), and
wherein the counter-fixation element (24) is configured as the metallic contact counter-means (26) of the base body (10).

7. The venting unit (100) according to claim 3, wherein the at least one electric connector (40, 42) comprises electric pins (44) electrically connected to the metallic contact counter-means (26).

8. The venting unit (100) according to claim 4, wherein the fixation element (32) and/or the counter-fixation element (24) comprise electrically conductive areas (38, 46) as the metallic contact means (34) and/or the metallic contact counter-means (26).

9. The venting unit (100) according to any one of the preceding claims, wherein the metallic contact means (34) and/or the metallic contact counter-means (26) comprise at least partly overmolded electric wires (39, 48).

10. The venting unit (100) according to any one of the preceding claims, wherein the fixation element (32) comprises holding means (50) and the metallic contact means (34) that are functionally separated.

11. The venting unit (100) according to any one of the preceding claims, wherein the metallic contact means (34) comprise electrically conductive areas (38) and/or electric wires (39).

12. The venting unit (100) according to any one of the preceding claims, further comprising a semipermeable membrane (54) closing the fluid permeable passageway (22) and being configured to allow gas exchange between the machinery space on a rear side (14) of the base body (10) and an environment on a front side (12) of the base body (10), while preventing fluid and/or dust particles to enter the machinery space.
